# EUROPÄISCHE PATENTSCHRIFT

(11) **EP 2 755 871 B1**
(45) Veröffentlichungstag und Bekanntmachung des Hinweises auf die Patenterteilung: **18.11.2015**
(21) Anmeldenummer: 12772070.4
(22) Anmeldetag: 14.09.2012
(51) Int. Cl.: B60R 21/203

(54) **VERFAHREN UND VORRICHTUNG ZUR SERIENFERTIGUNG EINER FAHRZEUGBAUGRUPPE, LAGEREINHEIT, FAHRZEUGLENKRAD SOWIE HUPENMODUL FÜR EINE LENKRADBAUGRUPPE SOWIE LENKRADBAUGRUPPE**
METHOD AND DEVICE FOR THE SERIAL PRODUCTION OF A VEHICLE ASSEMBLY, BEARING UNIT, VEHICLE STEERING WHEEL AND HORN MODULE FOR A STEERING WHEEL ASSEMBLY AND STEERING WHEEL ASSEMBLY
PROCÉDÉ ET DISPOSITIF DE FABRICATION EN SÉRIE D'UN BLOC STRUCTURAL DE VÉHICULE, UNITÉ PALIER, VOLANT DE DIRECTION, ET MODULE AVERTISSEUR SONORE POUR UN BLOC STRUCTURAL VOLANT DE DIRECTION, ET BLOC STRUCTURAL VOLANT DE DIRECTION ASSOCIÉ

(30) Priorität: 15.09.2011 DE 102011113351; 14.02.2012 DE 102012002722
(43) Veröffentlichungstag der Anmeldung: 23.07.2014
(73) Patentinhaber: TRW Automotive Safety Systems GmbH, 63743 Aschaffenburg (DE)
(72) Erfinder: BACHMANN, Stefan, 63872 Heimbuchenthal (DE); FRISCH, Ralph, 63776 Mömbris (DE); HAAS, Markus, 64759 Sensbachtal (DE); HELMSTETTER, Matthias, 63743 Aschaffenburg (DE); MAZUCH, Robert, 315500 Nadlac Kreis Arad / RO (RO); SYNDIKUS, Erich, 63743 Aschaffenburg (DE); SCHMID, Peter, 73560 Böbingen an der Rems (DE); SCHÜTZ, Dominik, 63872 Heimbuchenthal (DE); WINSEL, Rainer, 63843 Niedernberg (DE)
(74) Vertreter: Mehnert, Bernhard
(86) Internationale Anmeldenummer: PCT/EP2012/003850
(87) Internationale Veröffentlichungsnummer: WO 2013/037497

(56) Entgegenhaltungen:
- DE-A1-102006 005 642
- DE-A1-102008 024 853
- DE-A1-102008 064 581

## Beschreibung

Die Erfindung betrifft ein Verfahren zur Serienfertigung einer Fahrzeugbaugruppe sowie eine Vorrichtung zur Durchführung dieses Verfahrens. Ferner betrifft die Erfindung eine Lagereinheit, ein Fahrzeuglenkrad sowie ein Hupenmodul für eine solche Fahrzeugbaugruppe sowie eine Lenkradbaugruppe.

Bei vielen Fahrzeugbaugruppen, insbesondere im Fahrzeuginnenraum, wird ein Bauteil beweglich an einem fahrzeugseitigen Träger befestigt. Ein Beispiel für eine solche Fahrzeugbaugruppe ist eine Lenkradbaugruppe mit einem Fahrzeuglenkrad und einem daran beweglich gelagerten, zentralen Hupenmodul.

Aus optischen Gründen ist es erwünscht, dass die Spaltmaße zwischen dem Träger oder einer trägerseitigen Verkleidung und dem Bauteil möglichst gleichmäßig und schmal ausfallen. Andererseits muss sichergestellt werden, dass das Bauteil nicht am Träger verklemmen kann und so die Funktion des verschiebbaren Bauteils eingeschränkt wird. Die im Automobilbereich geforderten Spaltmaße liegen aber, vor allem im Innenraum eines Fahrzeugs, unter den addierten Fertigungstoleranzen der einzelnen Bauteile. Eine größere Genauigkeit der Bauteile ist aber nur mit einem wesentlich größeren Fertigungsaufwand erreichbar. DE 10 2006 005 642 A1 offenbart ein Verfahren nach dem Oberbegriff des Anspruchs 1 und eine Lagereinheit nach dem Oberbegriff des Anspruchs 7.

Aufgabe der Erfindung ist es deshalb, ein Verfahren zur Serienfertigung einer solchen Fahrzeugbaugruppe zu schaffen, das eine Ausrichtung eines zu befestigenden Bauteils mit der geforderten Genauigkeit ermöglicht. Aufgabe der Erfindung ist es ferner, eine Vorrichtung zur Durchführung dieses Verfahrens bereitzustellen sowie eine Lagereinheit, eine Lenkradbaugruppe, ein Hupenmodul und ein Fahrzeuglenkrad, das mit diesem Verfahren hergestellt werden kann.

DE 10 2008 024 853 A1 offenbart eine Vorrichtung nach den Oberbegriff des Anspruchs 16.

Zur Lösung der Aufgabe ist ein Verfahren zur Serienfertigung einer Fahrzeugbaugruppe, gemäß Anspruch 1 vorgesehen.

Dieses Verfahren bietet den Vorteil, dass eine genaue Ausrichtung der Bauteile erfolgen kann, trotz der großen Fertigungstoleranzen der einzelnen Bauteile.

Dies ist unter anderem dadurch möglich, dass am Träger und/oder am Bauteil je eine Lagereinheit vorgesehen ist, die jeweils exakt an diesem ausgerichtet werden kann. Die Lagereinheiten können anschließend mit sehr geringer Toleranz miteinander gekoppelt werden, um das Bauteil am Träger zu lagern. Die Lagereinheiten werden jeweils separat am Träger beziehungsweise am Bauteil ausgerichtet und erst anschließend an diesem fixiert. Erst wenn die Lagereinheiten exakt ausgerichtet sind, werden diese miteinander verbunden. Da die Ausrichtung der Halteeinheiten am fertigen Bauteil beziehungsweise Träger erfolgt, werden die tatsächlichen Abmessungen des Trägers beziehungsweise des Bauteils berücksichtigt. Alternativ zu zwei miteinander gekoppelten Lagereinheiten könnte nur eine Lagereinheit zwischen Träger und Bauteil vorgesehen sein.

Erfindungsgemäß weist das Verfahren folgende Einzelschritte für das Ausrichten und Befestigen der Lagerteile auf:
- vorläufiges Ausrichten der Lagerteile zumindest einer Lagereinheit zueinander, sodass die Anlagefläche und die Kontaktfläche einander berühren,
- Aufweichen zumindest eines, vorzugsweise beider Lagerteile im Bereich der Anlagefläche und der Kontaktfläche, insbesondere mittels Ultraschall, und
- individuelles, abschließendes Ausrichten der Lagerteile zueinander unter Verformung zumindest eines der Lagerteile im aufgeweichten Bereich in zumindest einer Richtung, vorzugsweise in drei Raumrichtungen, und Befestigen der beiden Lagerteile miteinander stoffschlüssig und/oder formschlüssig.

Die Lagerteile der Lagereinheiten müssen also nicht exakt auf Maß gefertigt werden, sondern können mit einem leichten Übermaß hergestellt werden. Sind die Anlagefläche beziehungsweise die Kontaktfläche aufgeweicht, kann das Lagerteil unter Verdrängung des aufgeweichten Materials auf die gewünschte Position ausgerichtet werden, wodurch eine beliebige Ausrichtung möglich ist. Nach dem Aushärten liegen die Kontaktfläche und die Anlagefläche in der gewünschten Position der Lagerteile formschlüssig aneinander an. Anschließend können die Lagerteile in dieser Position fixiert werden, beispielsweise durch zusätzliche Befestigungsmittel. Es ist aber auch, insbesondere bei einem Ultraschallschweißverfahren, denkbar, dass während des Erstarrens der aufgeweichten Bereiche der Lagerteile neben der formschlüssigen Verbindung auch eine stoffschlüssige Verbindung hergestellt wird, wobei diese entweder der Vorfixierung oder der endgültigen Befestigung dienen kann.

Die Lagerteile sind insbesondere aus Kunststoff , um sie leicht zu erhitzen und zu verschmelzen. Alternativ ist es aber möglich, ein Lagerteil aus Kunststoff und das andere aus Metall oder einem weniger leicht schmelzenden Kunststoff zu verwenden. Nur der leicht schmelzende Kunststoff wird erwärmt und deformiert. Das nicht schmelzende Lagerteil dient in diesem Fall vorzugsweise als eine Art Matrize oder Patrize, so dass sich ein Formschluss ergeben kann, wenn der weiche Kunststoff in oder um die Matrize bzw. Patrize herum geformt wird. Die Befestigung der beiden Lagerteile kann in diesem Fall durch ein zusätzliches Befestigungsmittel erfolgen.

Die Lagerteile werden vorzugsweise in Abhängigkeit der tatsächlichen Abmessungen des verbauten Trägers und/oder des verbauten Bauteils beim vorläufigen und/oder abschließenden Ausrichten zueinander positioniert. Das heißt, vor dem Ausrichten der Lagerteile werden die tatsächlichen Abmessungen, die für die Spaltbildung verantwortlich sind, des Trägers beziehungsweise des Bauteils erfasst, sodass dessen Herstellungstoleranzen bei der Ausrichtung berücksichtigt werden können.

Die Lagereinheit wird vorzugsweise nach dem individuellen Ausrichten durch zusätzliche Befestigungsmittel am Träger und/oder am Bauteil gesichert, insbesondere mittels zumindest eines Bolzens oder zumindest einer Schraube. Das Aufweichen und Erstarren dient in dieser Ausführungsform gewissermaßen dazu, eine exakt ausgerichtete, formschlüssige Basis beziehungsweise ein formschlüssiges Gegenlager zu schaffen. Durch das Befestigungsmittel werden die Lagerteile in der durch das Aufweichen und Erstarren ausgerichteten Position zuverlässig fixiert. Die Haltekräfte werden also überwiegend durch das Befestigungsmittel übertragen und nicht oder nur teilweise über das erstarrte Material der Lagerteile.

Das Ausrichten kann nacheinander in mehreren, idealerweise senkrecht aufeinander stehenden Richtungen erfolgen. Das vorläufige Ausrichten erfolgt vorzugsweise in der Ebene der Anlagefläche beziehungsweise der Kontaktfläche und das abschließende Ausrichten quer, insbesondere senkrecht zur Anlagefläche beziehungsweise zur Kontaktfläche. Das heißt, die Anlagefläche bzw. die Kontaktfläche weist ein leichtes Übermaß auf. In einem ersten Schritt erfolgt eine Ausrichtung in einer xy-Richtung, anschließend erfolgt die endgültige Ausrichtung in z-Richtung auf das jeweils andere Lagerteil zu, wobei das aufgeweichte, überstehende Material verdrängt wird, sodass dieses nach dem Erstarren eine stabile, formschlüssige Auflagefläche zur Fixierung in der gewünschten Position bildet.

Erfolgt das Aufweichen der Lagerteile durch ein Ultraschallschweißverfahren, ist dieses Lagerteil mit einer Sonotrode gekoppelt, insbesondere an dieser gehaltert. Die Sonotrode kann vorzugsweise so ausgebildet sein, dass diese in allen drei Raumrichtungen und damit beliebig verschiebbar ist und somit ein einfaches Ausrichten der Lagerteile möglich ist. In einem ersten Verfahrensschritt erfolgt das vorläufige Ausrichten der Anlagefläche bzw. der Kontaktfläche. Anschließend erfolgt die Aktivierung der Sonotrode und das Aufweichen der Lagerteile. Nach dem Aufweichen können die Lagerteile exakt zueinander ausgerichtet werden, wobei das aufgeweichte Material teilweise verdrängt wird.

Vorzugsweise ist auch das jeweils andere Bauteil in einer verstellbaren Halterung eingespannt, die in allen drei Raumrichtungen und damit beliebig bewegbar ist. Insbesondere kann zur Durchführung des Verfahrens ein 6-Achsen-Tisch verwendet werden, sodass eine einfache Positionierung des Trägers und des zu befestigenden Bauteils möglich ist.

Das Ausrichten der einander zugeordneten Lagerteile einer Lagereinheit erfolgt vorzugsweise nur entweder auf Basis der Abmessungen des Trägers oder der Abmessungen des Bauteils, abhängig davon, ob die Lagerteile der Lagereinheit des Trägers bzw. des Bauteils zugeordnet sind. Zusätzlich kann ein Messschritt vorgesehen sein, in dem die für die endgültige Ausrichtung notwendige relative Verschiebung der Lagerteile zueinander bestimmt wird. Das heißt, bei der Ausrichtung der Lagerteile werden die Fertigungstoleranzen des Trägers beziehungsweise des Bauteils berücksichtigt.

Nach dem Ausrichten der Lagerteile werden Träger und Bauteil aneinander befestigt und die Lagereinheiten von Träger und Bauteil miteinander gekoppelt, insbesondere indem die Lagereinheiten ineinandergesteckt werden und eine Führung bilden. Die Lagerteile werden also zuerst jeweils am Träger bzw. am Bauteil befestigt und an diesem ausgerichtet. Erst nach diesem Ausrichten erfolgt die Koppelung des Trägers und des Bauteils, indem die Lagereinheiten miteinander verbunden werden. Dies ist auf einfache Weise möglich, indem die Lagereinheiten eine Führung bilden, in die das Bauteil eingeschoben werden kann.

Das Verfahren wird erfindungsgemäß zur Serienfertigung eines Fahrzeuglenkrades oder eines daran befestigten Hupenmoduls verwendet, wobei das Fahrzeuglenkrad ein Skelett mit einer Umschäumung ist und/oder mit einer separaten Abdeckung versehen werden kann, bevor eine lenkradseitige Lagereinheit an dem Lenkrad angebracht wird. Eines der Lagerteile der lenkradseitigen Lagereinheit ist beweglich und wird in Abhängigkeit von den individuellen Abmessungen der Umschäumung oder der Abdeckung zum anderen Lagerteil ausgerichtet und an ihm befestigt. Das erfindungsgemäße Verfahren ist besonders gut zur Herstellung einer solchen Lenkradbaugruppe geeignet, da beispielsweise die Umschäumung des Lenkrades nur mit einem sehr großen Aufwand mit den erforderlichen Fertigungstoleranzen hergestellt werden kann. Durch das Verfahren ist eine genauere und einfachere Positionierung des Hupenmoduls am Fahrzeuglenkrad möglich. Die Abdeckung des Lenkrads kann beispielsweise eine Umschäumung oder eine Belederung sein.

Zur Lösung der Aufgabe ist des Weiteren eine Lagereinheit einer Fahrzeugbaugruppe gemäß Anspruch 7 vorgesehen.

Der Schweißfortsatz ist insbesondere zum gegenüberliegenden Lagerteil zulaufend ausgebildet und weist beispielsweise einen trapezförmigen oder dreieckigen Querschnitt auf. Der Schweißfortsatz liegt also vorzugsweise mit einer Kante bzw. mit einer sehr geringen Fläche an der jeweils anderen Fläche an. Dies ermöglicht ein schnelles und energiesparendes Aufweichen mittels eines Ultraschallschweißverfahrens, da die über die Sonotrode eingeleitete Energie auf eine sehr geringe Fläche wirkt. Der Schweißfortsatz ist vorzugsweise ringförmig ausgebildet und insbesondere konzentrisch zu der als Buchse ausgebildeten Lagereinheit verlaufend. Der Schweißfortsatz verläuft also um diese Buchse herum, wodurch eine gute Abstützung zur Aufnahme der durch den Bolzen bzw. die Schraube eingeleiteten Kräfte erfolgen kann.

Die Lagereinheit ist beispielsweise als Führungsbuchse ausgebildet, sodass das Hupenmodul in der durch die Buchse definierten Betätigungsrichtung bewegt werden kann, um die Hupe zu betätigen.

Zur trägerseitigen oder bauteilseitigen Zusatzbefestigung der Lagereinheit ist beispielsweise ein zusätzliches, als separates Teil ausgebildetes Befestigungsmittel vorgesehen, das an einem der Lagerteile angreift. Das separate Teil kann beispielsweise eine Rastfeder oder ein anderes geeignetes Befestigungsmittel sein.

Eines der Lagerteile kann ein einstückig angeformter Fortsatz eines Lenkradskeletts, einer Lenkradskelettumspritzung oder einer Hupenmodulaufnahme sein.

Erfindungsgemäß ist des Weiteren ein Fahrzeuglenkrad mit zumindest einer Befestigungsaufnahme für ein Hupenmodul, insbesondere für ein Gassackmodul, vorgesehen, wobei an der Befestigungsaufnahme zumindest eine erfindungsgemäße Lagereinheit vorgesehen ist zur Lagerung und Positionierung des Hupenmoduls.

Das eine Lagerteil kann einstückig an einem Lenkradskelett oder einer Lenkradumspritzung angeformt sein, wobei in einer solchen Ausführungsform zumindest drei Lagereinheiten vorgesehen sind, um eine stabile Befestigung des Hupenmoduls zu gewährleisten.

Erfindungsgemäß ist zudem ein Hupenmodul vorgesehen, insbesondere ein Gassackmodul, zur Befestigung an einem Fahrzeuglenkrad, insbesondere einem erfindungsgemäßen Fahrzeuglenkrad, wobei am Modul zumindest eine erfindungsgemäße Lagereinheit vorgesehen ist.

Die Lagereinheit ist beispielsweise einstückig mit einer topfförmigen Hupenmodulaufnahme ausgebildet. Die Lagereinheit kann ein radial äußeres, buchsenförmiges Lagerteil und ein darin angeordnetes radial inneres buchsenförmiges Lagerteil aufweisen, wobei die Lagerteile über einen Flanschabschnitt miteinander verbunden sind. Vorzugsweise ist zwischen den Lagerteilen ein radialer Ringspalt vorhanden, um diese relativ zueinander bewegen zu können.

Zur Lösung der Aufgabe ist des Weiteren eine Lenkradbaugruppe vorgesehen, mit einem erfindungsgemäßen Fahrzeuglenkrad, einem erfindungsgemäßen Hupenmodul, das am Fahrzeuglenkrad befestigt ist, wobei zwischen Fahrzeuglenkrad und Modul erfindungsgemäße Lagereinheiten vorgesehen sind, über die das Modul axial verschiebbar am Fahrzeuglenkrad befestigt ist.

Am Fahrzeuglenkrad und/oder am Modul ist vorzugsweise ein Befestigungs-mittel oder eine Aufnahme für ein Befestigungsmittel und/oder an einem Lagerteil ein weiteres Befestigungsmittel vorgesehen. Das oder die Befestigungsmittel können das beim Ausrichten zu bewegende Lagerteil lenkradseitig oder modulseitig zusätzlich sichern. Die Befestigungsmittel sind beispielsweise eine Schraube und eine Mutter, und die Aufnahmen sind Öffnungen, durch die die Schraube geführt ist. Die Aufnahmen sind so ausgebildet, dass das Befestigungsmittel ein definiertes Spiel hat und auch bei eingesetztem Befestigungsmittel eine begrenzte Beweglichkeit zum Ausrichten der Lagerteile vorhanden ist, diese aber dennoch aneinander gesichert sind. Nach dem genauen Ausrichten kann die eingestellte Position durch das Befestigungsmittel fixiert werden.

Das Hupenmodul ist zum Beispiel über eine Rastfeder am Fahrzeuglenkrad gesichert, wobei an der lenkradseitigen Lagereinheit eine Nut zum Einschnappen der Rastfeder ausgebildet ist. Die ermöglicht nach der Montage der Lagereinheiten eine einfache, insbesondere werkzeuglose Montage des Hupenmoduls. Dieses muss lediglich auf das Fahrzeuglenkrad aufgesetzt werden und kann auch einfache Weise an diesem verrastet werden. Die Nut ist vorzugsweise so ausgebildet, dass eine begrenzte Bewegung des Hupenmoduls zur Betätigung der Hupe möglich ist. Die Rastfeder kann beispielsweise eine Druckfeder sein. Es ist aber auch denkbar, dass zur Montage des Hupenmoduls andere Haltemittel, beispielsweise ein Bolzen oder eine Schraube verwendet werden.

Zur Durchführung des Verfahrens ist des Weiteren eine Vorrichtung zur Herstellung einer Lenkradbaugruppe gemäß Anspruch 16 vorgesehen. Erfindungsgemäß sind die Fixiereinheit und die Sonotrode zueinander bewegbar. Es genügt zwar, wenn nur der Tisch oder die Sonotrode bewegbar ist, also entweder die Sonotrode oder der Tisch ortsfest ist. In einer bevorzugten Ausführungsform weist die Vorrichtung aber einen 6-Achsen-Tisch auf, bei dem sowohl der Tisch als auch die Sonotrode bewegbar sind.

Die erfindungsgemäße Vorrichtung hat beispielsweise ein Messsystem, das die gegenseitige Position der jeweiligen Lagereinheit zu den Abmessungen des zugeordneten Trägers oder Bauteils bestimmt.

Zudem kann ein Positioniersystem vorgesehen sein, das eine Verstellung der Lagerteile zueinander in zumindest einer Achse, vorzugsweise in allen drei Raumrichtungen erlaubt.

Zur Befestigung der Haltemittel kann zudem eine Schraubeinheit, insbesondere eine Mehrfachschraubeinheit für die Befestigungsmittel zur schnellen, automatischen Arretierung der ausgerichteten Lagereinheit am Träger oder am Bauteil vorhanden sein.

Vorzugsweise wird eine Steuerung verwendet, die in Abhängigkeit von den im Messsystem ermittelten Daten das Positioniersystem ansteuert, um die Lagerteile zueinander auszurichten. An der Vorrichtung kann auch eine Halterung für das zu bewegende Lagerteil vorgesehen sein, wobei die Halterung vorzugsweise durch die Sonotrode gebildet ist.

Zur Erfassung der Position des Trägers oder des Bauteils umfasst das Messsystem zum Beispiel zumindest einen Laser. Zur einfachen Positionierung weist das Positioniersystem den bereits erwähnten 6-Achsen-Tisch auf.

Weitere Vorteile und Merkmale ergeben sich aus der nachfolgenden Beschreibung in Verbindung mit den beigefügten Zeichnungen. In diesen zeigen:
- Figur 1 eine erfindungsgemäße Lenkradbaugruppe,
- Figur 2 eine schematische Schnittansicht durch die Lenkradbaugruppe aus Figur 1, die die erfindungsgemäßen Lagereinheiten sowie das erfindungsgemäße Hupenmodul und das erfindungsgemäße Fahrzeuglenkrad zeigen,
- Figur 3 eine zweite Schnittansicht durch die Lenkradbaugruppe aus Figur 1,
- Figur 4 eine Schnittansicht durch ein erfindungsgemäßes Fahrzeuglenkrad,
- Figur 5 eine Draufsicht auf das Fahrzeuglenkrad aus Figur 4 im Bereich einer erfindungsgemäßen Lagereinheit,
- Figur 6 eine Schnittansicht durch ein erfindungsgemäßes Hupenmodul mit einer erfindungsgemäßen Lagereinheit,
- Figur 7 eine Draufsicht auf die Lagereinheit des Moduls aus Figur 6,
- Figur 8 eine Draufsicht auf das Fahrzeuglenkrad der Lenkradbaugruppe aus Figur 1,
- Figur 9 eine Draufsicht auf das erfindungsgemäße Hupenmodul der Lenkradbaugruppe aus Figur 1,
- Figur 10 eine erfindungsgemäße Vorrichtung zur Fertigung einer Lenkradbaugruppe aus Figur 1,
- Figur 11 einen ersten Verfahrensschritt zur Fertigung einer erfindungsgemäßen Lenkradbaugruppe,
- Figur 12 einen zweiten Verfahrensschritt zur Fertigung einer erfindungsgemäßen Lenkradbaugruppe,
- Figur 13 einen dritten Verfahrensschritt zur Fertigung einer erfindungsgemäßen Lenkradbaugruppe,
- Figur 14 einen vierten Verfahrensschritt zur Fertigung einer erfindungsgemäßen Lenkradbaugruppe,
- Figur 15 einen fünften Verfahrensschritt zur Fertigung einer erfindungsgemäßen Lenkradbaugruppe, und
- Figur 16 einen sechsten Verfahrensschritt zur Fertigung einer erfindungsgemäßen Lenkradbaugruppe.

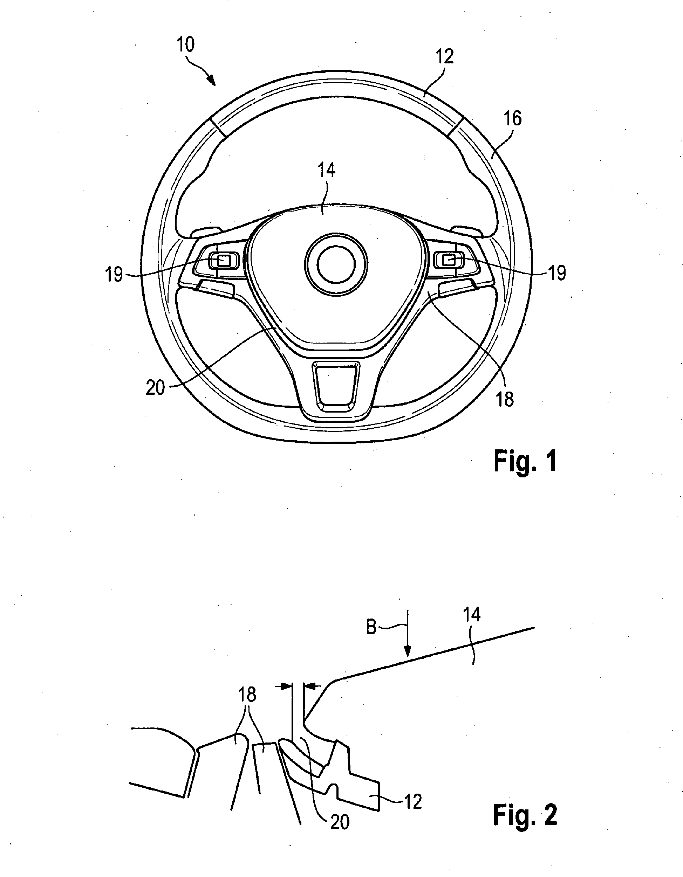

In Figur 1 ist eine Lenkradbaugruppe 10 mit einem Fahrzeuglenkrad 12 sowie einem Hupenmodul 14, genauer einem Gassackmodul, gezeigt. Das Hupenmodul 14 ist beweglich am Fahrzeuglenkrad 12 befestigt und kann zur Betätigung der Hupe in eine Betätigungsrichtung B gegen das Fahrzeuglenkrad 12 gedrückt werden (siehe auch Figur 2). Das Fahrzeuglenkrad 12 weist ein Lenkradskelett 15, eine Umschäumung 16 sowie eine Abdeckung 18, in der mehrere Bedienelemente 19 integriert sind, auf. Das Fahrzeuglenkrad 12 bildet einen Träger und das Hupenmodul 14 ein daran zu befestigendes Bauteil. Wenn im Folgenden deshalb von Lenkrad und Modul die Rede ist, so ist dies lediglich ein Beispiel für einen Träger und ein Bauteil, welches nicht einschränkend zu verstehen ist.

Zwischen der Abdeckung 18 und dem Hupenmodul 14 ist ein Spalt 20 vorgesehen. Dieser soll zum einen eine reibungsarme Bewegung des Hupenmoduls 14 in Betätigungsrichtung B sicherstellen und zum anderen ein Verklemmen des Hupenmoduls 14 am Fahrzeuglenkrad 12 beim Betätigen der Hupe verhindern.

Aus optischen Gründen ist es erwünscht, dass dieser Spalt sehr schmal und gleichmäßig ausfällt. In der Praxis werden Spaltmaße von unter 0,5 mm erfordert. Die aufaddierten Herstellungstoleranzen des Fahrzeuglenkrads 12, der Umschäumung 16, der Abdeckung 18 beziehungsweise des Hupenmoduls 14 einer solchen Lenkradbaugruppe 10 sind aber bei herkömmlichen Fertigungsverfahren größer als die geforderten 0,5 mm. Die führt bei der Fertigung der Lenkradbaugruppen zu einem ungleichmäßigen Spaltmaß.

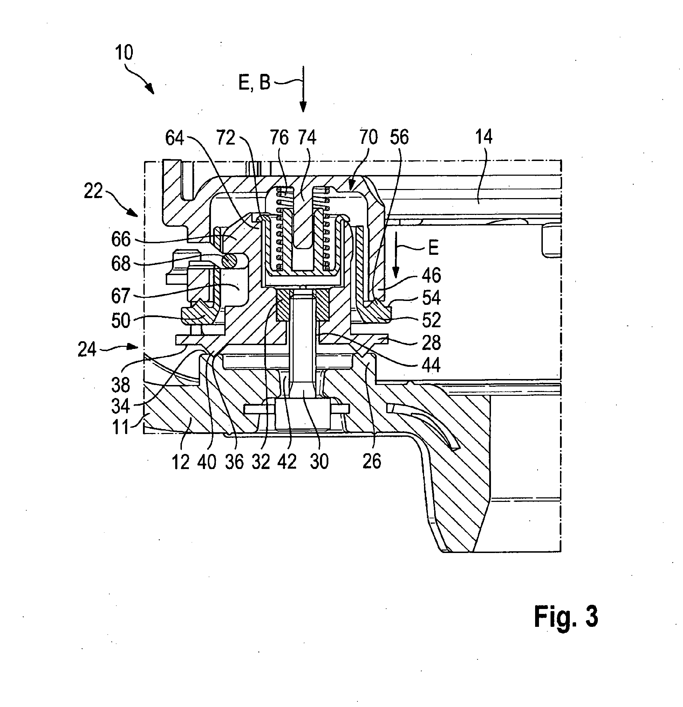

Um das Hupenmodul 14 perfekt auszurichten, weist die erfindungsgemäße Lenkradbaugruppe 10, wie in Figur 3 zu sehen ist, eine modulseitige Lagereinheit 22 sowie eine trägerseitige Lagereinheit 24 auf, die, wie im Folgenden dargestellt wird, nach der Herstellung des Fahrzeuglenkrads 12 sowie des Hupenmoduls 14 eine Ausrichtung beim Zusammensetzen der Komponenten ermöglicht.

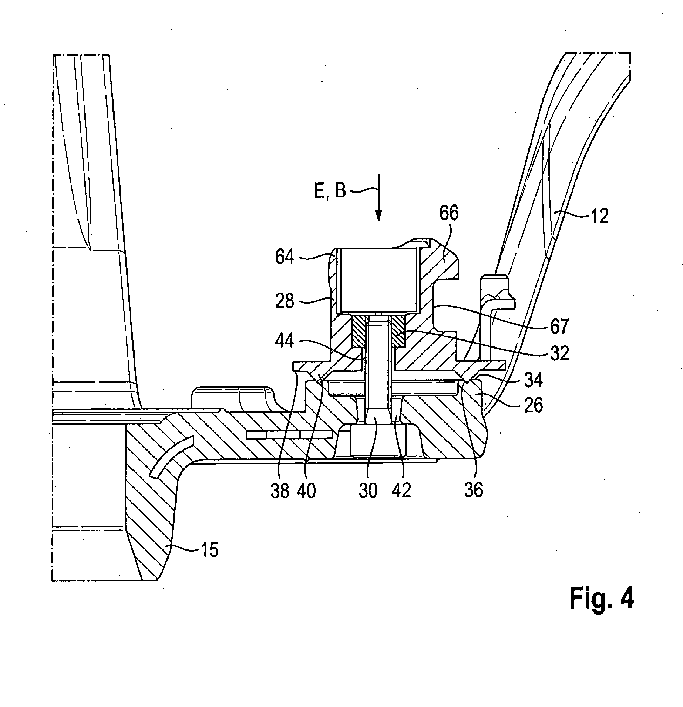

Wie in den Figuren 3 und 4 zu sehen ist, weist die lenkradseitige Lagereinheit 24 ein erstes Lagerteil 26 auf, das hier einstückig mit dem Fahrzeuglenkrad 12, genauer mit dem Skelett 11 ausgebildet ist.

Ein zweites Lagerteil 28 ist über ein Befestigungsmittel 30, hier eine Schraube, die mit einem als Mutter ausgebildeten, im zweiten Lagerteil 28 sitzenden, zweiten Befestigungsmittel 32 gesichert ist, mit dem Fahrzeuglenkrad 12 verbunden. An den Lagerteilen 26, 28 ist jeweils eine Aufnahme 42, 44 vorgesehen, durch die sich das Befestigungsmittel 30 erstreckt. Die Aufnahmen 42, 44 sind hier Bohrungen, deren Durchmesser so gewählt ist, dass das Befestigungsmittel 30 ein definiertes Spiel in den Aufnahmen 42, 44 aufweist. Dadurch können die Lagerteile 26, 28 in einem gewissen Bereich gegeneinander verschoben und, wie im Folgenden beschrieben wird, zueinander ausgerichtet werden.

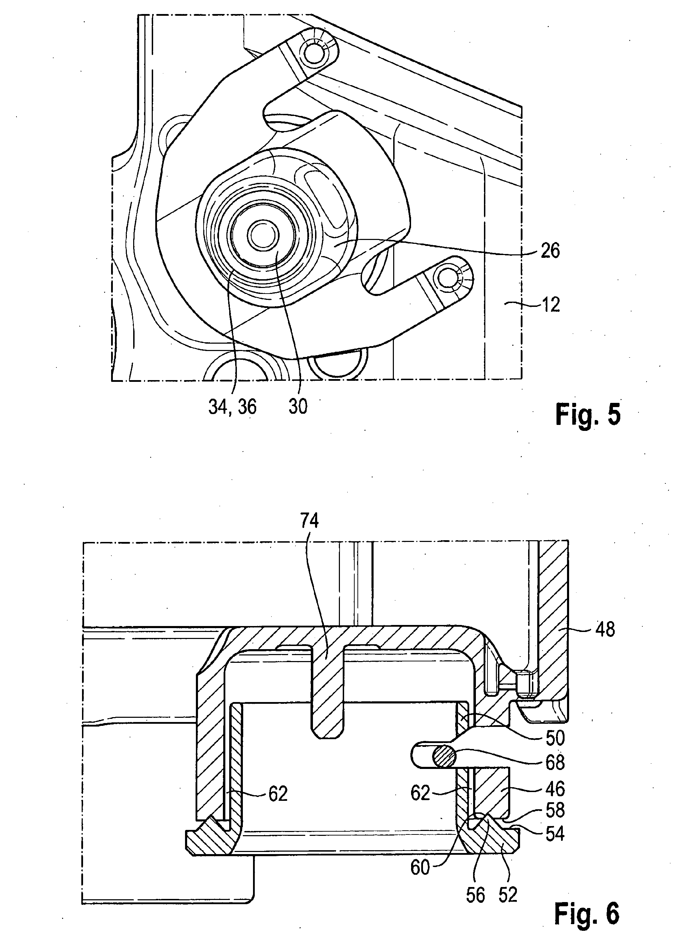

Das erste Lagerteil 26 ist mit einer Anlagefläche 34 versehen, die, wie in Figur 5 zu sehen ist, im Wesentlichen ringförmig ausgebildet ist und eine im Wesentlichen V-förmige Nut 36 aufweist. Das zweite Lagerteil 28 weist eine zur Anlagefläche 34 korrespondierende, ringförmig ausgebildete Kontaktfläche 38 auf, die einen Schweißfortsatz 40 auf. Der Schweißfortsatz 40 besitzt einen trapezförmigen Querschnitt und läuft in Richtung zur Anlagefläche 34 zu, wobei der Schweißfortsatz 40 gemäß einer Ausführungsform beim sogenannten vorläufigen Ausrichten (Ausrichten in xy-Richtung) noch nicht in die Nut 36 ragt.

Die Anlagefläche 34 sowie die Kontaktfläche 38 sind um die jeweilige Aufnahme 42, 44 umlaufend, insbesondere konzentrisch ausgebildet.

Zur genauen Positionierung des zweiten Lagerteils 28 am ersten Lagerteil 26 beziehungsweise am Fahrzeuglenkrad 12 wird das zweite Lagerteil 28 mit der Kontaktfläche 38 an die Anlagefläche 34 des ersten Lagerteils 26 angelegt und in der Ebene der Anlagefläche 34, also in xy-Richtung ausgerichtet (vorläufiges Ausrichten), wobei die Kontaktfläche 38 lediglich mit dem Schweißfortsatz 40 an der Anlagefläche 34 anliegt.

Falls der Schweißfortsatz 40 gemäß einer alternativen Ausführungsform bereits während des vorläufigen Ausrichtens in die Nut 36 ragt und seitlich dennoch Spiel für die Ausrichtung in xy-Richtung hat, kann eine gewisse Vorzentrierung erfolgen.

Der Schweißfortsatz 40 ist mit einem leichten Übermaß gefertigt. Das heißt, quer zur Ebene der Anlagefläche 34, also in z-Richtung, ist keine exakte Ausrichtung. Um diese Ausrichtung zu ermöglichen, wird der Schweißfortsatz 40 in einem nächsten Schritt, beispielsweise mittels eines Ultraschallschweißverfahrens, aufgeweicht. Dadurch kann das zweite Lagerteil 28 unter Verdrängung des Materials des Schweißfortsatzes 40 in z-Richtung positioniert werden.

Ist die endgültige Position erreicht, wird der Schweißfortsatz 40 ausgehärtet. Erweichtes Kunststoffmaterial des Schweißfortsatzes 40 läuft in die Nut 36 und füllt diese aus, sodass ein Formschluss in xy-Richtung vorhanden ist. Nach dem Aushärten liegen die Lagerteile 26, 28 an der Kontaktfläche 38 und der Anlagefläche 34 stoffschlüssig aneinander an.

Das Ausrichten der Lagerteile 26, 28 erfolgt individuell für jedes Lenkrad, und zwar abhängig von den tatsächlichen Außenabmessungen der Aufnahmeöffnung im Fahrzeuglenkrad 12, in welche das Modul 14 eingesetzt wird, relativ zur Lagereinheit.

In der hier gezeigten Ausführungsform erfolgt das Befestigen des zweiten Lagerteils 28 aber durch die Befestigungsmittel 30, 32, die auch die Kräfte beim Aktivieren des Gassacks aufnehmen. Nach dem exakten Ausrichten und anschließendem Aushärten des aufgeweichten Materials werden das erste und das zweite Befestigungsmittel 30, 32 angezogen beziehungsweise gegeneinander verspannt, wodurch die Anlagefläche 34 und die Kontaktfläche 38 gegeneinander gedrückt und somit die Lagerteile 26, 28 zueinander fixiert werden. Die Anlagefläche 34 und die Kontaktfläche 38 bilden hier gewissermaßen ein Gegenlager zur Aufnahme der durch das Befestigungsmittel 30 aufgebrachten Druckkräfte.

Im gezeigten Ausführungsbeispiel ist das Lagerteil 26 ein Abschnitt des Skeletts, also aus Metall, wogegen das Lagerteil 28 aus Kunststoff besteht. Bei dieser Materialpaarung kommt es zu keinem Verschweißen der Lagerteile 26, 28, sondern zu einem Schmelzen des Lagerteils 28, das sich im Bereich des Schweißfortsatzes 40 an die Form des Lagerteils 26 anpasst.

Je nach verwendetem Material der Anlagefläche 34 und der Kontaktfläche 38 beziehungsweise der Art des Erweichens des Schweißfortsatzes 40 kann eine stoffschlüssige Verbindung zwischen den Lagerteilen 26, 28 hergestellt sein (bevorzugt werden hierfür gleiche Kunststoffmaterialien für beide Lagerteile verwendet), wodurch das zweite Lagerteil 28 am Fahrzeuglenkrad 12 fixiert ist.

Das Hupenmodul 14 sowie die modulseitige Lagereinheit 22 sind im Detail in Figur 6 dargestellt. Die modulseitige Lagereinheit 22 weist ebenfalls ein erstes Lagerteil 46 auf, das einstückig mit dem Gehäuse 48 des Hupenmoduls 14, hier dem topfförmigen Gasgeneratorträger ausgebildet ist, sowie ein zweites Lagerteil 50.

Das erste Lagerteil 46 und das zweite Lagerteil 50 sind jeweils buchsenförmig ausgebildet und aus Kunststoff, wobei das zweite Lagerteil 50 gewissermaßen in das erste Lagerteil 46 eingeschoben ist.

Das zweite Lagerteil 50 weist einen Flanschabschnitt 52 auf, über den die Lagerteile 46, 50 miteinander verbunden sind. Die Kontaktfläche 54 des zweiten Lagerteils 50, an der der Schweißfortsatz 56 vorgesehen ist, ist am Flanschabschnitt 52 angeordnet. Der zu Beginn im Querschnitt trapezförmige Schweißfortsatz 56 ist kreisringförmig umlaufend auf dem gesamten Flanschabschnitt 52 ausgebildet.

Das erste Lagerteil 46 besitzt eine korrespondierende Anlagefläche 58, die an einem axialen Ende des buchsenförmigen ersten Lagerteils 46 angeordnet ist und an der eine zum Schweißfortsatz 56 korrespondierende Nut 60 vorgesehen ist.

Das vorläufige Ausrichten des zweiten Lagerteils 50 erfolgt analog zur vorläufigen Ausrichtung der Lagerteile 26, 28 des Fahrzeuglenkrads 12. In einem ersten Schritt erfolgt ein vorläufiges Ausrichten der Lagerteile, wobei der Schweißfortsatz 56 an der Anlagefläche 58 anliegt. Die Nut 60 dient hier allenfalls als zusätzliche Positionierungshilfe.

Anschließend wird die Kontaktfläche 54 bzw. der Schweißfortsatz 56 über eine Sonotrode aufgeweicht und das zweite Lagerteil 50 endgültig positioniert, wobei das Material des Schweißfortsatzes 40 teilweise verdrängt und in die Nut 60 gedrückt wird.

Wie insbesondere in Figur 6 zu sehen ist, ist zwischen den hülsenförmigen Abschnitten der Lagerteile 46, 50 ein radialer Ringspalt 62 vorgesehen, durch den zwischen dem ersten Lagerteil 46 und dem zweiten Lagerteil 50 ein Spiel hergestellt ist, das erforderlich ist, um die Lagerteile 46, 50 individuell zueinander ausrichten zu können, und zwar abhängig von den Außenabmessungen des Moduls, welche für den Spalt zum Lenkrad entscheidend sind.

Das Ausrichten von Lenkrad 12 und Modul 14 lässt sich vereinfacht dadurch erklären, dass das bewegliche Lagerteil jeweils relativ zu den Lagen der Spaltränder auf eine Art Nulllage gebracht wird, sodass die später aneinander anliegende oder aneinander gleitenden Lagerteile 28, 50 gemeinsam in Nulllage positioniert sind.

Ist die abschließende Position erreicht, wird das Material ausgehärtet. Im Gegensatz zur trägerseitigen Lagereinheit 24 ist hier allerdings kein zusätzliches Befestigungsmittel vorgesehen. Durch das Verschmelzen der Kontaktfläche 54 mit der Anlagefläche 58 wird deshalb eine stoffschlüssige Verbindung hergestellt, durch die die Lagerteile 46, 50 aneinander befestigt sind.

Nachdem die modulseitige und die trägerseitige Lagereinheit 22, 24 mit dem Hupenmodul 14 bzw. dem Fahrzeuglenkrad 12 verbunden ist, werden in einem nächsten Schritt die Lagereinheiten 22, 24 ineinander zur Bildung eines Gleitlagers geschoben und so das Hupenmodul 14 am Fahrzeuglenkrad 12 befestigt.

Das zweite Lagerteil 28 der trägerseitigen Lagereinheit 24 weist zur Befestigung einen topfförmigen Abschnitt 64 auf, an dem eine Rastnase 66 radial vorsteht. Ferner ist eine Nut 67 vorgesehen (siehe insbesondere Figur 3). Der topfförmige Abschnitt 64 ist so ausgebildet, dass dieser in das hülsenförmige zweite Lagerteil 50 der modulseitigen Lagereinheit 22 eingeschoben werden kann.

Am zweiten Lagerteil 50 der modulseitigen Lagereinheit 22 ist eine Rastfeder 68 vorgesehen, die in der Nut 67 verrasten kann. Das Hupenmodul 14 kann also einfach in eine Einschubrichtung E, die hier im Wesentlichen der Betätigungsrichtung B entspricht, auf das Fahrzeuglenkrad 12 aufgesetzt und verrastet werden.

Wie insbesondere in Figur 2 zu sehen ist, ist die Nut 67 so ausgebildet, dass diese eine begrenztes Bewegung der modulseitigen Lagereinheit 22 und somit des Hupenmoduls 14 in Betätigungsrichtung B ermöglicht.

Zwischen den Lagereinheiten 22, 24 ist zusätzlich eine Rückstelleinheit 70 vorgesehen, mit einem topfförmigen Führungsmodul 72, das in das zweite trägerseitige Lagerteil 28 eingesetzt wird. Ein modulseitiger Führungszapfen 74 ragt in das Führungsmodul 72. Zwischen Hupenmodul 14 und Führungsmodul 72 ist ein Federelement 76 vorgesehen, das das Hupenmodul 14 gegen die Betätigungsrichtung B beaufschlagt.

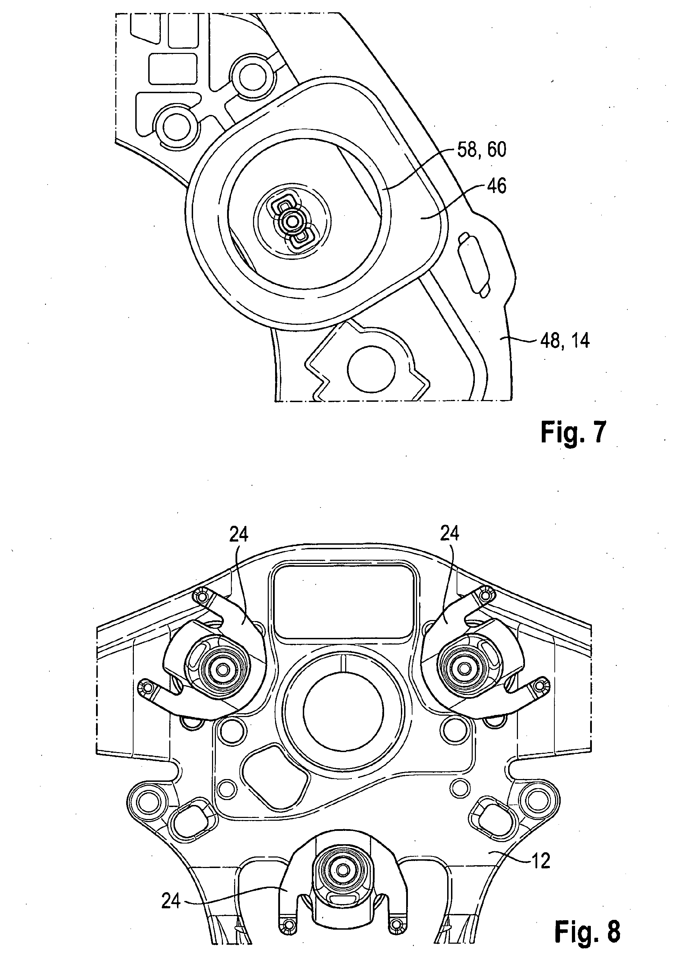

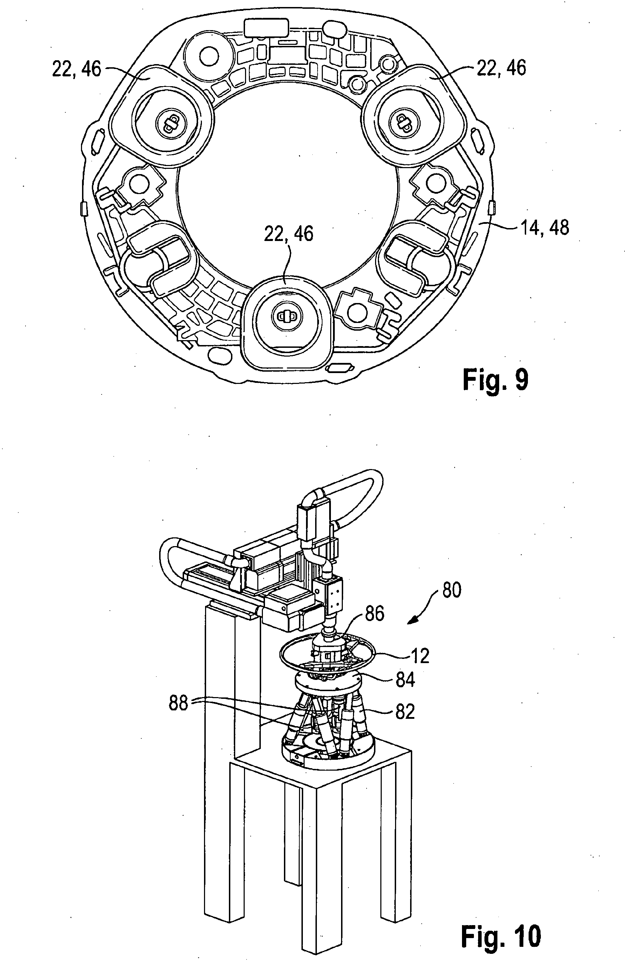

Wie in den Figuren 8 und 9 zu sehen ist, sind am Fahrzeuglenkrad 12 (Figur 8) und am Modul (Figur 9) jeweils drei Lagereinheiten 24 bzw. 22 vorgesehen. Diese erlauben eine sichere, dreidimensionale Befestigung und Positionierung des Moduls 14 am Fahrzeuglenkrad 12.

Eine Vorrichtung 80 zur Fertigung einer erfindungsgemäßen Lenkradbaugruppe 10 ist in Figur 10 gezeigt. Die Vorrichtung 80 weist eine Fixiereinheit 82 auf, die hier einen in drei Raumrichtungen bewegbaren Tisch 84 aufweist. An der Fixiereinheit 82 kann ein Träger, hier ein Fahrzeuglenkrad 12, oder ein Bauteil, hier das Hupenmodul 14, arretiert werden.

Die Vorrichtung 80 umfasst ferner wenigstens eine bewegbare Sonotrode 86, an der eine oder die Lagereinheiten 22 oder 24 bzw. ein Lagerteil 26, 28, 46, 50 einer Lagereinheit 22, 24 befestigt werden kann.

Die Vorrichtung weist einen 6-Achsen-Tisch auf, sodass sowohl die Fixiereinheit 82 bzw. der Tisch 84 der Fixiereinheit 82 als auch die Sonotrode 86 in drei senkrecht zueinander stehenden Raumrichtungen bewegbar und somit beliebig zueinander positionierbar sind. Es ist aber auch denkbar, dass der Tisch 84 oder die Sonotrode 86 ortsfest sind, also nur eines der beiden Elemente bewegbar ist.

Das dadurch gebildete Positionierungssystem kann ausgehend von den gemessenen Positionen die Position der Lagerteile 26, 28, 46, 50 zueinander so verstellen, dass die gewünschte Position erreicht wird. Dies erfolgt in allen drei Raumrichtungen.

In die Vorrichtung 80 ist ein Messsystem mit einem Laser 90 integriert, das die tatsächlichen Abmessungen sowie die gegenseitige Position der jeweiligen Lagereinheiten 22, 24 bzw. der Lagerteile 26, 28, 46, 50 zu den Außenrändern des Moduls und der Modulaufnahme im Lenkrad bestimmen kann. Alternativ dazu kann eine eigene Station mit einer Messeinrichtung verwendet werden, und die Messdaten werden an die Steuerung der Vorrichtung übergeben.

Vorzugsweise ist eine Steuerung vorgesehen, die die Signale des Messsystems auswerten und daraus die exakte Position der Lagerteile 28, 50 ermitteln kann. Eine zusätzliche Schraubeinheit 88 ermöglicht das Montieren der Befestigungsmittel 30, 32 ohne die Lenkradbaugruppe 10 aus der Vorrichtung 80 entnehmen zu müssen.

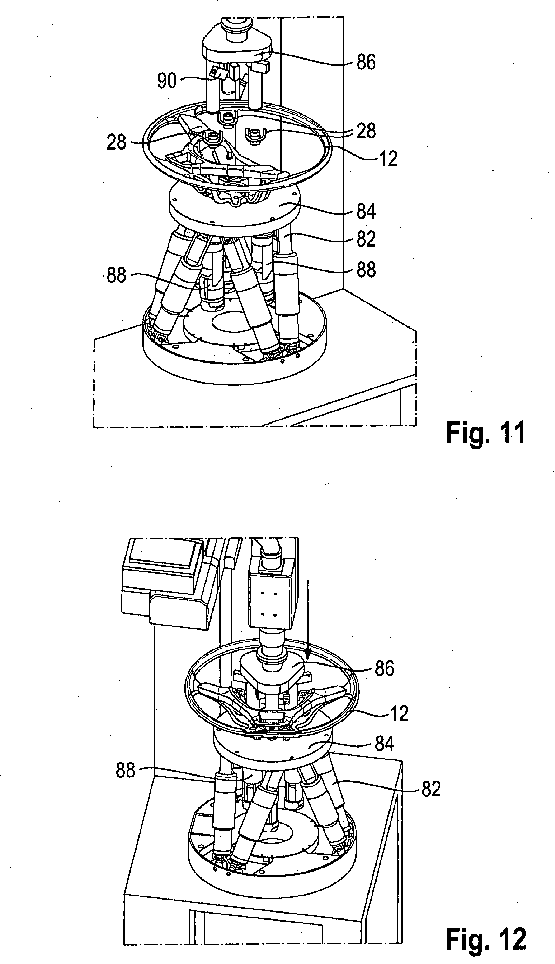

Das Verfahren zur Herstellung einer erfindungsgemäßen Lenkradbaugruppe ist in den Figuren 11 bis 16 dargestellt.

In einem ersten Verfahrensschritt wird ein Bauteil, hier das Fahrzeuglenkrad 12 mit den einstückig angeformten ersten Lagerteilen 26 der drei Lagereinheiten 24 an der Fixiereinheit 82 arretiert (Figur 11). Anschließend werden auf die Sonotrode 86, die drei zapfenartige Sonotrodenstößel hat, die drei zweiten Lagerteile 28 der trägerseitigen Lagereinheit 24 aufgesetzt (Figur 12).

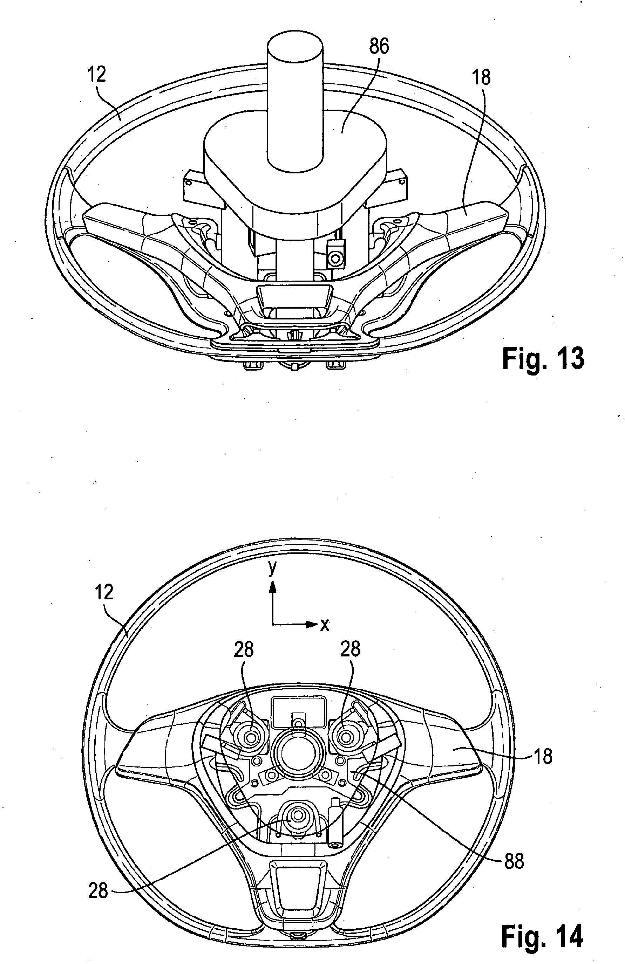

In einem nächsten Schritt (Figur 13) werden die zweiten Lagerteile 28 mit der Sonotrode 86 gegen das Fahrzeuglenkrad 12 beziehungsweise die ersten Lagerteile 26 geführt und in der Ebene der Anlageflächen 34, also in xy-Richtung ausgerichtet (Figur 14).

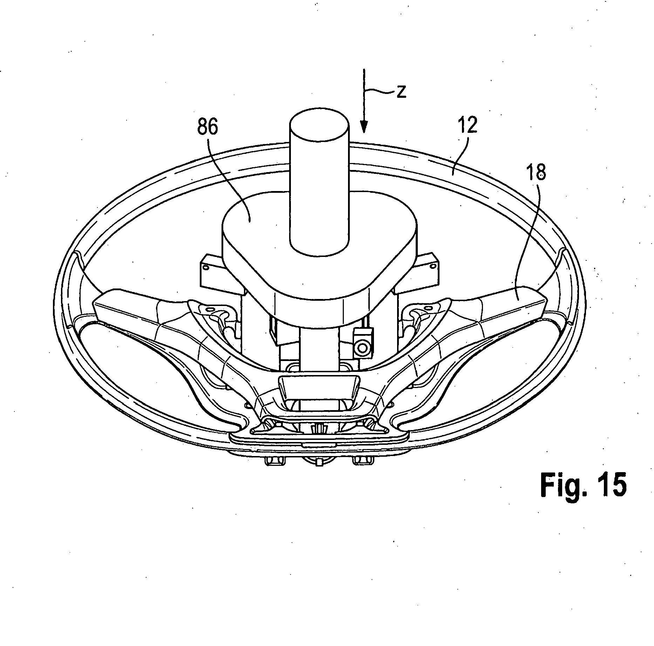

Nach erfolgter vorläufiger Ausrichtung wird die Sonotrode 86 aktiviert, sodass die Schweißfortsätze 40 aufgeweicht werden. Sobald die Schweißfortsätze 40 aufgeweicht sind, wird die Sonotrode 86 in z-Richtung bewegt (Figur 15), bis die gewünschte Position der zweiten Lagerteile 28 erreicht ist (individuelle Ausrichtung).

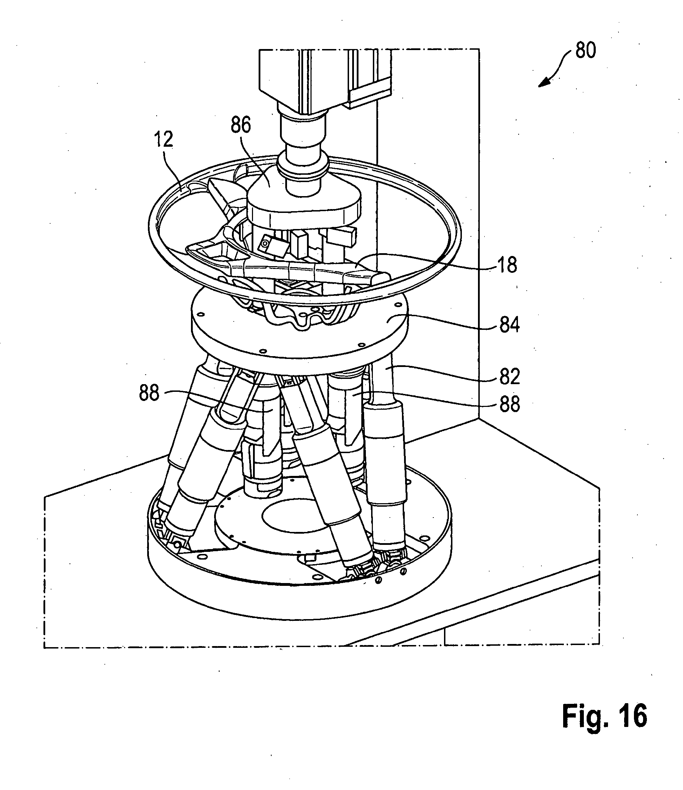

Anschließend wird die Sonotrode 86 deaktiviert, sodass die Schweißfortsätze 40 aushärten können. Sobald diese ausgehärtet sind, werden die Lagerteile 26, 28 durch die Befestigungsmittel 30, 32 mittels der Schraubeinheit 88 gegeneinander fixiert (Figur 16).

Das Montieren der modulseitigen Lagereinheit 22 erfolgt analog dazu, wobei das Hupenmodul 14 an der Fixiereinheit 82 befestigt wird und die zweiten Lagerteile 50 jeweils an der Sonotrode 86 gehaltert sind.

## Patentansprüche

1. Verfahren zur Serienfertigung einer Fahrzeugbaugruppe, insbesondere einer Innenraumbaugruppe, mit einem fahrzeugseitigen Träger, insbesondere einem Fahrzeuglenkrad (12), und einem am Träger zu befestigenden Bauteil, insbesondere einem Hupenmodul (14), wobei dem Bauteil eine modulseitige, zumindest aus zwei Lagerteilen (46, 50) bestehende Lagereinheit (22) und/oder dem Träger eine trägerseitige, zumindest aus zwei Lagerteilen (26, 28) bestehende Lagereinheit (24) zugeordnet ist, und wobei eines der Lagerteile (28, 50) der jeweiligen Lagereinheit (22, 24) eine Kontaktfläche (38, 58) und das andere der Lagerteile (26, 46) zumindest eine Anlagefläche (34, 54) aufweist, wobei das Verfahren folgende Schritte aufweist:
- Individuelles Ausrichten der beiden Lagerteile (26, 28, 46, 50) zumindest einer Lagereinheit (22, 24) zueinander in Abhängigkeit von den tatsächlichen Abmessungen des verbauten Trägers und/oder des verbauten Bauteils,
- Befestigen der beiden zueinander ausgerichteten Lagerteile (26, 28, 46, 50) aneinander, und
- Befestigen des Bauteils am Träger, wobei die Position von Träger und Bauteil zueinander durch zumindest eine Lagereinheit (22, 24) festgelegt ist,
und wobei das Verfahren **gekennzeichnet ist durch** folgende Einzelschritte für das Ausrichten und Befestigen der Lagerteile (26, 28, 46, 50):
- vorläufiges Ausrichten der Lagerteile (26, 28, 46, 50) zumindest einer Lagereinheit (22, 24) zueinander, sodass die Anlagefläche (34, 58) und die Kontaktfläche (38, 54) einander berühren,
- Aufweichen zumindest eines der Lagerteile (26, 28, 46, 50) im Bereich der Anlagefläche (34, 58) und/oder der Kontaktfläche (38, 54), , und
- individuelles, abschließendes Ausrichten der Lagerteile (26, 28, 46, 50) zueinander unter Verformung zumindest eines der Lagerteile (26, 28, 46, 50) im aufgeweichten Bereich in zumindest einer Richtung, vorzugsweise in drei Raumrichtungen, und
- Befestigen der beiden Lagerteile (26, 28, 46, 50) miteinander stoffschlüssig und/oder formschlüssig.

2. Verfahren nach Anspruch 1, **dadurch gekennzeichnet,dass** das Aufweichen zumindest eines der Lagerteile (26, 28, 46, 50) im Bereich der Anlagefläche (34, 58) und/oder der Kontaktfläche (38, 54) mittels Ultraschall erfolgt.

3. Verfahren nach Anspruch 1 oder 2, **dadurch gekennzeichnet, dass** die Lagerteile (26, 28, 46, 50) in Abhängigkeit der tatsächlichen Abmessungen des verbauten Trägers und/oder des verbauten Bauteils beim vorläufigen und/oder abschließenden Ausrichten zueinander positioniert werden, und/ oder
**dadurch gekennzeichnet, dass** die Lagereinheit (22, 24) nach dem individuellen Ausrichten durch zusätzliche Befestigungsmittel (30) am Träger und/oder am Bauteil gesichert wird, insbesondere mittels zumindest eines Bolzens oder zumindest einer Schraube, und/ oder **dadurch gekennzeichnet, dass** das vorläufige Ausrichten in der Ebene der Anlagefläche (34, 58) und/ oder der Kontaktfläche (38, 54) erfolgt und das abschließende Ausrichten quer, insbesondere senkrecht zur Anlagefläche (34, 58) und/ oder zur Kontaktfläche (38, 54) erfolgt.

4. Verfahren nach zumindest einem der voranstehenden Ansprüche 1 bis 3,
**dadurch gekennzeichnet, dass** ein Lagerteil (28, 46) mit einer Sonotrode (86) gekoppelt wird, insbesondere an ihr gehaltert wird, und/ oder
**dadurch gekennzeichnet, dass** Träger und/oder Bauteil vor dem Ausrichten jeweils in eine verstellbare Halterung, insbesondere auf einem 6-Achsen-Tisch, eingespannt werden/wird.

5. Verfahren nach zumindest einem der voranstehenden Ansprüche, **dadurch gekennzeichnet, dass** das Ausrichten der einander zugeordneten Lagerteile (26, 28, 46, 50) einer Lagereinheit (22, 24) nur auf Basis entweder der Abmessungen des Trägers oder der Abmessungen des Bauteils erfolgt, abhängig davon, ob die Lagerteile (26, 28, 46, 50) der Lagereinheit (22, 24) des Trägers bzw. des Bauteils zugeordnet sind, und/oder **dadurch gekennzeichnet, dass** ein Messschritt vorgesehen ist, in dem die für die endgültige Ausrichtung notwendige relative Verschiebung der Lagerteile (26, 28, 46, 50) zueinander bestimmt wird, und / oder
**dadurch gekennzeichnet, dass** nach dem Ausrichten der Lagerteile (26, 28, 46, 50) Träger und Bauteil aneinander befestigt und Lagereinheiten (22, 24) von Träger und Bauteil miteinander gekoppelt werden, insbesondere indem die Lagereinheiten (22, 24) ineinandergesteckt werden und eine Führung bilden.

6. Verfahren nach zumindest einem der voranstehenden Ansprüche zum Herstellen eines Fahrzeuglenkrades (12) und eines daran befestigten Hupenmoduls (14), wobei das Fahrzeuglenkrad (12) ein Skelett hat, mit einer Umschäumung und/oder einer separaten Abdeckung (18) versehen wird, bevor eine lenkradseitige Lagereinheit (24) an dem Fahrzeuglenkrad (12) angebracht wird, wobei eines der Lagerteile (28) der lenkradseitigen Lagereinheit (24) beweglich ist und in Abhängigkeit von den individuellen Abmessungen der Umschäumung und/oder Abdeckung (18) zum anderen Lagerteil (26) ausgerichtet und an ihm befestigt wird.

7. Lagereinheit (22, 24) einer Fahrzeugbaugruppe, vorzugsweise einer Innenraumbaugruppe, wobei die Fahrzeugbaugruppe einen fahrzeugseitigen Träger, insbesondere ein Fahrzeuglenkrad (12), und ein am Träger zu befestigendes Bauteil, insbesondere ein Hupenmodul (14), aufweist, **dadurch gekennzeichnet, dass** die Lagereinheit (22, 24) aus zumindest zwei Lagerteilen (26, 28, 46, 50) besteht, die individuell, vorzugsweise in drei Achsen, zueinander ausgerichtet und insbesondere durch Ultraschallschweißen miteinander verbunden sind,**dadurch gekennzeichnet, dass** eines der Lagerteile (26, 28, 46, 50) der jeweiligen Lagereinheit (22, 24) ein Kontaktfläche (38, 58) und das andere der Lagerteile (28, 50) zumindest eine Anlagefläche (34, 54) aufweist, wobei an der Kontaktfläche (38, 58) und/oder der Anlagefläche (34, 54) zumindest ein Schweißfortsatz (40, 56) ausgebildet sind/ist, an dem die Lagerteile (26, 28, 46, 50) einander kontaktieren und vorzugsweise miteinander verschweißt sind.

8. Lagereinheit nach Anspruch 7 **dadurch gekennzeichnet, dass** der Schweißfortsatz (40, 56) zum gegenüberliegenden Lagerteil (26, 28, 46, 50) zulaufend ausgebildet ist.

9. Lagereinheit nach Anspruch 7 oder 8, **dadurch gekennzeichnet, dass** die Lagereinheit als Führungsbuchse ausgebildet ist, und / oder **dadurch gekennzeichnet, dass** ein zusätzliches, als separates Teil ausgebildetes Befestigungsmittel (30) vorgesehen ist, das an einem der Lagerteile (26, 28, 46, 50) angreift, zur trägerseitigen oder bauteilseitigen Zusatzbefestigung der Lagereinheit (22, 24), und / oder **dadurch gekennzeichnet, dass** eines der Lagerteile (26, 28, 46, 50) ein einstückig angeformter Fortsatz eines Lenkradskeletts, einer Lenkradumspritzung oder einer Hupenmodulaufnahme ist.

10. Fahrzeuglenkrad (12) mit zumindest einer Befestigungsaufnahme für ein Hupenmodul (14), insbesondere für ein Gassackmodul, **dadurch gekennzeichnet, dass** an der Befestigungsaufnahme zumindest eine Lagereinheit (24) nach zumindest einem der Ansprüche 7 bis 9 vorgesehen ist, zur Lagerung und Positionierung des Hupenmoduls (14).

11. Fahrzeuglenkrad nach Anspruch 10, **dadurch gekennzeichnet, dass** ein Lagerteil (26) einstückig an einem Lenkradskelett oder einer Lenkradumspritzung angeformt ist.

12. Hupenmodul (14), insbesondere Gassackmodul, zur Befestigung an einem Fahrzeuglenkrad (12), insbesondere an einem Fahrzeuglenkrad nach einem der Ansprüche 10 oder 11, **dadurch gekennzeichnet, dass** am Hupenmodul (14) zumindest eine Lagereinheit (22) nach zumindest einem der Ansprüche 7 bis 9 vorgesehen ist, weiterhin vorzugsweise
**dadurch gekennzeichnet, dass** die Lagereinheit (22) einstückig mit einer topfförmigen Hupenmodulaufnahme ausgebildet ist und/oder dass die Lagereinheit (22) ein radial äußeres, buchsenförmiges Lagerteil (46) und ein darin angeordnetes radial inneres, buchsenförmiges Lagerteil (50) aufweist, die über einen Flanschabschnitt (52) miteinander verbunden sind, vorzugsweise wobei ein radialer Ringspalt (62) zwischen den Lagerteilen (46, 50) vorhanden ist.

13. Lenkradbaugruppe (10) mit einem Fahrzeuglenkrad (12) nach einem der Ansprüche 10 bis 11 und einem Hupenmodul (14) nach Anspruch 12, das am Fahrzeuglenkrad (12) befestigt ist, **dadurch gekennzeichnet, dass** zwischen Fahrzeuglenkrad (12) und Hupenmodul (14) Lagereinheiten (22, 24) nach einem der Ansprüche 7 bis 9 vorgesehen sind, über die das Hupenmodul (14) axial verschieblich am Fahrzeuglenkrad (12) befestigt ist.

14. Lenkradbaugruppe nach Anspruch 13, **dadurch gekennzeichnet, dass** am Fahrzeuglenkrad (12) und/oder am Hupenmodul (14) ein Befestigungsmittel (30) oder eine Aufnahme (42, 44) für ein Befestigungsmittel (30) und/oder an einem Lagerteil (26, 28, 46, 50) ein weiteres Befestigungsmittel (32) vorgesehen ist, wobei das oder die Befestigungsmittel (30, 32) das beim Ausrichten zu bewegende Lagerteil (28, 50) lenkradseitig oder modulseitig zusätzlich sichert bzw. sichern.

15. Lenkradbaugruppe nach zumindest einem der Ansprüche 13 und/ oder 14, **dadurch gekennzeichnet, dass** das Hupenmodul (14) über eine Rastfeder (68) am Fahrzeuglenkrad (12) gesichert ist und wobei vorzugsweise an der lenkradseitigen Lagereinheit (24) eine Nut zum Einschnappen der Rastfeder (68) ausgebildet ist.

16. Vorrichtung zur Herstellung einer Lenkradbaugruppe nach einem der Ansprüche 13 bis 15, insbesondere mittels eines Verfahrens nach einem der Ansprüche 1 bis 6, wobei die Vorrichtung (80) eine Fixiereinheit (82) zum Arretieren des Trägers und/oder des Bauteils sowie wenigstens eine bewegbare Sonotrode (86) aufweist, wobei die Fixiereinheit (82) und die Sonotrode (86) zueinander bewegbar sind, **dadurch gekennzeichnet, dass** die Vorrichtung (80) weiterhin ein Positioniersystem aufweist, das eine Verstellung der Lagerteile (26, 28, 46, 50) zueinander in zumindest einer Achse, vorzugsweis in drei Raumrichtungen erlaubt.

17. Vorrichtung nach Anspruch 16, **dadurch gekennzeichnet, dass** die Vorrichtung (80) wenigstens eines der folgenden Merkmale aufweist:
- ein Messsystem, das die gegenseitige Position der jeweiligen Lagereinheit (22, 24) zu den Abmessungen des zugeordneten Trägers oder Bauteils bestimmt,
- eine Schraubeinheit (88), insbesondere eine Mehrfachschraubeinheit, zur automatischen Arretierung der ausgerichteten Lagereinheit (22, 24) am Träger oder am Bauteil,
- eine Steuerung, die in Abhängigkeit von den im Messsystem ermittelten Daten das Positioniersystem ansteuert, um die Lagerteile (26, 28, 46, 50) zueinander auszurichten,
- eine Halterung für das zu bewegende Lagerteil (28, 50), wobei die Halterung durch die Sonotrode (86) gebildet ist.

18. Vorrichtung nach Anspruch 17, **dadurch gekennzeichnet, dass** das Messsystem-zumindest einen Laser zur Erfassung der Position des Trägers oder des Bauteils aufweist und/oder
**dadurch gekennzeichnet, dass** das Positioniersystem ein 6-Achsen-Tisch ist.

## Claims

1. A method for series production of a vehicle assembly, especially an interior assembly, comprising a vehicle-side support, especially a vehicle steering wheel (12), and a component to be fastened to the support, especially a horn module (14), wherein a module-side bearing unit (22) consisting of at least two bearing members (46, 50) is assigned to the component and/or a support-side bearing unit (24) consisting of at least two bearing members (26, 28) is assigned to the support, and wherein one of the bearing members (28, 50) of the respective bearing unit (22, 24) includes a contact surface (38, 58) and the other one of the bearing members (26, 46) includes at least one bearing surface (34, 54), wherein the method comprises the following steps of:
- individually orientating the two bearing members (26, 28, 46, 50) of at least one bearing unit (22, 24) relative to each other as a function of the actual dimensions of the support installed and/or the component installed,
- fastening the two bearing members (26, 28, 46, 50) orientated relative to each other to each other, and
- fastening the component to the support, the position of the support and the component relative to each other being defined by at least one bearing unit (22, 24),
and wherein the method is **characterized by** the following single steps for orientating and fastening the bearing members (26, 28, 46, 50):
- provisionally orientating the bearing members (26, 28, 46, 50) of at least one bearing unit (22, 24) relative to each other so that the bearing surface (34, 58) and the contact surface (38, 54) contact each other,
- softening at least one of the bearing members (26, 28, 46, 50) in the area of the bearing surface (34, 58) and/or of the contact surface (38, 54), and
- individually finally orientating the bearing members (26, 28, 46, 50) relative to each other while deforming at least one of the bearing members (26, 28, 46, 50) in the softened area in at least one direction, preferably in three directions in space, and
- fastening the two bearing members (26, 28, 46, 50) to each other by adhesive closure and/or form closure.

2. The method according to claim 1, **characterized in that** the softening of at least one of the bearing members (26, 28, 46, 50) in the area of the bearing surface (34, 58) and/or of the contact surface (38, 54) is carried out by means of ultrasonic sound.

3. The method according to claim 1 or 2, **characterized in that** the bearing members (26, 28, 46, 50) are positioned as a function of the actual dimensions of the support installed and/or of the component installed during provisional and/or final orientation relative to each other, and/or
**characterized in that** the bearing unit (22, 24) is secured after individual orientation by additional fastening means (30) on the support and/or on the component, especially by means of at least one bolt or at least one screw, and/or
**characterized in that** the provisional orientation is performed in the plane of the bearing surface (34, 58) and/or of the contact surface (38, 54) and the final orientation is performed transversely, especially perpendicularly to the bearing surface (34, 58) and/or to the contact surface (38, 54).

4. The method according to at least one of the preceding claims 1 to 3, **characterized in that** a bearing member (28, 46) is coupled to a sonotrode (86), especially held at the same, and/or
**characterized in that** the support and/or the component is/are clamped into an adjustable holder, especially on a six-axis bench, before orientation.

5. The method according to at least one of the preceding claims, **characterized in that** the bearing members (26, 28, 46, 50) assigned to each other of a bearing unit (22, 24) are orientated only on the basis of either the dimensions of the support or the dimensions of the component depending on whether the bearing members (26, 28, 46, 50) are assigned to the bearing unit (22, 24) of the support and the component, resp., and/or
**characterized in that** a measuring step is provided in which the relative displacement of the bearing members (26, 28, 46, 50) relative to each other required for the final orientation is determined and/or
**characterized in that** after orientating the bearing members (26, 28, 46, 50) the support and the component are fastened to each other and bearing units (22, 24) of the support and the component are coupled to each other, especially **in that** the bearing units (22, 24) are nested and form a guide.

6. The method according to at least one of the preceding claims for manufacturing a vehicle steering wheel (12) and a horn module (14) fastened thereto, the steering wheel (12) having a skeleton and being provided with a foam material and/or a separate cover (118), before a steering wheel-side bearing unit (24) is arranged at the vehicle steering wheel (12), wherein one of the bearing members (28) of the steering wheel-side bearing unit (24) is movable and is orientated as a function of the individual dimensions of the foam material and/or cover (18) relative to the other bearing member (26) and is fastened thereto.

7. A bearing unit (22, 24) of a vehicle assembly, preferably an interior assembly, wherein the vehicle assembly includes a vehicle-side support, especially a vehicle steering wheel (12), and a component to be fastened to the support, especially a horn module (14), **characterized in that** the bearing unit (22, 24) consists of at least two bearing members (26, 28, 46, 50) which are orientated individually, preferably in three axes, relative to each other and are interconnected especially by ultrasonic welding, **characterized in that** one of the bearing members (26, 28, 46, 50) of the respective bearing unit (22, 24) has a contact surface (38, 58) and the other one of the bearing members (28, 50) has at least one bearing surface (34, 54), wherein at the contact surface (38, 58) and/or the bearing surface (34, 54) at least one welding extension (40, 56) is/are formed on which the bearing members (26, 28, 46, 50) contact each other and are preferably welded to each other.

8. The bearing unit according to claim 7, **characterized in that** the welding extension (40, 56) is tapered toward the opposite bearing member (26, 28, 46, 50).

9. The bearing unit according to claim 7 or 8, **characterized in that** the bearing unit is in the form of a guiding sleeve and/or **characterized in that** an additional fastening means (30) formed as separate member is provided which acts on one of the bearing members (26, 28, 46, 50) for support-side or component-side additional fastening of the bearing unit (22, 24) and/or **characterized in that** one of the bearing members (26, 28, 46, 50) is an integrally formed extension of a steering wheel skeleton, an injection molding around the steering wheel or a horn module acceptance.

10. A vehicle steering wheel (12) comprising at least one fastening acceptance for a horn module (14), especially for an airbag module, **characterized in that** at the fastening acceptance at least one bearing unit (24) according to at least one of the claims 7 to 9 is provided for supporting and positioning the horn module (14).

11. The vehicle steering wheel according to claim 10, **characterized in that** a bearing member (26) is integrally formed at a steering wheel skeleton or an injection molding around the steering wheel.

12. A horn module (14), especially an airbag module, for fastening to a vehicle steering wheel (12), especially to a vehicle steering wheel according to any one of the claims 10 or 11, **characterized in that** at the horn module (14) at least one bearing unit (22) according to at least one of the claims 7 to 9 is provided, further preferably **characterized in that** the bearing unit (22) is formed integrally with a cup-shaped horn module acceptance and/or that the bearing unit (22) includes a radially outer sleeve-like bearing member (46) and a radially inner sleeve-like bearing member (50) arranged therein, which are interconnected via a flange portion (52), preferably wherein a radial annular clearance (62) is provided between the bearing members (46, 50).

13. A steering wheel assembly (10) including a vehicle steering wheel (12) comprising at least one of the features of the claims 10 to 11 and a horn module (14) comprising at least one of the features of claim 12 fastened to the vehicle steering wheel (12), **characterized in that** between the vehicle steering wheel (12) and the horn module (14) bearing units (22, 24) comprising at least one of the features of the claims 7 to 9 are provided via which the horn module (14) is fastened axially movably to the vehicle steering wheel (12).

14. The steering wheel assembly according to claim 13, **characterized in that** a fastening means (30) or an acceptance (42, 44) for a fastening means (30) is provided at the vehicle steering wheel (12) and/or at the horn module (14) and/or another fastening means (32) is provided at a bearing member (26, 28, 46, 50), wherein the fastening means (30, 32) additionally secure(s) the bearing member (28, 50) to be moved during orientation on the steering wheel side or on the module side.

15. The steering wheel assembly according to at least one of the claims 13 and/or 14, **characterized in that** the horn module (14) is secured to the vehicle steering wheel (12) via a stop spring (68) and wherein preferably a groove for clicking the stop spring (68) is formed at the steering wheel-side bearing unit (24).

16. An apparatus for manufacturing a vehicle assembly, especially a steering wheel assembly according to any one of the claims 13 to 15, in particular by means of a method according to any one of the claims 1 to 6, **characterized in that** the apparatus (80) includes a fixing unit (82) for arresting the support and/or the component as well as at least one movable sonotrode (86), wherein preferably the fixing unit (82) and the sonotrode (86) are movable relative to each other and wherein the apparatus (80) further includes a positioning system which permits adjustment of the bearing members (26, 28, 46, 50) relative to each other in at least one axis, preferably in three directions in space.

17. The apparatus according to claim 16, **characterized in that** the apparatus (80) comprises at least one of the following features:
- a measuring system which determines the mutual position of the respective bearing unit (22, 24) relative to the dimensions of the assigned support or component,
- a screwing unit (88), especially a multi-screwing unit, for automatically arresting the orientated bearing unit (22, 24) on the support or on the component,
- a control unit for controlling the positioning system as a function of the data established in the measuring system so as to orientate the bearing members (26, 28, 46, 50) relative to each other,
- a holder for the bearing member (28, 50) to be moved, wherein the holder is formed by the sonotrode (86).

18. The apparatus according to claim 17, **characterized in that** the measuring system includes at least one laser for detecting the position of the support or the component and/or
**characterized in that** the positioning system is a six-axis bench.

## Revendications

1. Procédé pour la production en série d'un ensemble de véhicule, en particulier un ensemble intérieur, comprenant un support monté sur un véhicule, en particulier un volant de direction de véhicule (12), et un composant pour fixation à l'élément de support, en particulier un module klaxon (14), dans lequel le composant est une unité de palier (22) côté module, en au moins deux parties de palier (46, 50) et/ou le support est une unité de palier (24) côté support, en au moins deux parties de palier (26, 28), et dans lequel l'une des parties de palier (28, 50) de chaque unité de palier (22, 24) possède une surface de contact (38, 58) et l'autre partie de palier (26, 46) possède au moins une surface d'appui (34, 54), ledit procédé comprenant les étapes consistant à:
- Alignement individuel des deux parties de palier (26, 28, 46, 50) d'au moins une unité de palier (22, 24) l'une par rapport à l'autre, en fonction des dimensions effectives du support installé et/ou du composant installé,
- Fixation l'un par rapport à l'autre des deux paliers alignés respectivement (26, 28, 46, 50), et
- Fixation du composant sur le support, dans lequel la position du support et du composant l'un par rapport à l'autre est fixe par l'intermédiaire d'au moins une unité de palier (22, 24),
et pour lequel le procédé est **caractérisé par** les étapes individuelles suivantes pour aligner et fixer les parties de palier (26, 28, 46, 50):
- Orientation préliminaire des parties de palier (26, 28, 46, 50) d'au moins une unité de palier (22, 24) l'une par rapport à l'autre, de sorte que la surface d'appui (34, 58) et la surface de contact (38, 54) se touchent,
- Ramollissement d'au moins une des parties de palier (26, 28, 46, 50) dans la zone de la surface d'appui (34, 58) et / ou la surface de contact (38, 54), et
- Alignement final individuel des parties de palier (26, 28,46, 50) l'une par rapport à l'autre par déformation d'au moins l'une des parties de palier (26, 28, 46, 50) dans la zone ramollie dans au moins une direction, de préférence dans trois dimensions, et
- Fixation des deux parties d'appui (26, 28, 46, 50) réunies par fermeture matière et/ou de forme.

2. Procédé selon la revendication 1, **caractérisé en ce que** le ramollissement d'au moins une des parties de palier (26, 28, 46, 50) dans la zone de la surface d'appui (34, 58) et / ou la surface de contact (38, 54) se fait au moyen d'ultrasons.

3. Procédé selon la revendication 1 ou 2, **caractérisé en ce que** les parties de palier (26, 28,46, 50) sont positionnées l'une par rapport à l'autre en fonction des dimensions effectives du support installé et/ou du composant installé au cours de l'alignement préliminaire et/ou final, et/ou **caractérisé en ce que** l'unité de palier (22, 24) après alignement individuel est fixée par des moyens de fixation complémentaires (30) sur le support et/ou sur le composant, en particulier au moyen d'au moins un boulon ou au moins une vis, et/ou **caractérisé en ce que** l'alignement préliminaire se fait dans le plan de la surface d'appui (34, 58) et/ou de la surface de contact (38, 54) et que l'alignement définitif se fait transversalement, en particulier perpendiculairement à la surface d'appui (34, 58) et/ou à la surface de contact (38, 54).

4. Procédé selon au moins l'une des revendications précédentes 1 à 3, **caractérisé en ce qu'**une partie de palier (28, 46) est assemblée avec une sonotrode (86), en particulier à celui qui est fixé, et/ou **caractérisé en ce qu'**un support et/ou composant est/sont serrés avant l'alignement de chacun dans un support réglable, en particulier sur une table 6-axe.

5. Procédé selon au moins l'une des revendications précédentes, **caractérisé en ce que** l'alignement des parties correspondantes de palier (26, 28, 46, 50) d'une unité de palier (22, 24) s'effectue uniquement sur la base soit des dimensions du support ou soit les dimensions du composant, selon comment les parties de palier (26, 28, 46, 50) de l'unité de palier (22, 24) du support, plus précisément du composant, sont assemblées, et/ou **caractérisé en ce qu'**une étape de mesure est prévue, durant laquelle est déterminé le déplacement relatif nécessaire à l'alignement des parties de palier (26, 28, 46, 50) les unes par rapport aux autres, et/ou **caractérisé en ce qu'**après alignement des parties de palier (26, 28, 46, 50) support et composant fixé l'un à l'autre, et les unités de palier (22, 24) de support et composant seront couplées ensemble, en particulier dans lequel les unités de palier (22, 24) sont insérées les unes dans les autres et forment un guide.

6. Procédé selon au moins l'une des revendications précédentes pour la fabrication d'un volant de direction de véhicule (12) et attaché à celui-ci un module klaxon (14), ledit volant de direction de véhicule (12) comporte une armature qui est pourvu d'un enrobage de mousse et/ou un couvercle séparé (18), avant cela une unité de palier (25) côté volant est monté sur le volant de direction de véhicule (12), dans lequel l'une des parties de palier (28) de l'unité de palier (24) côté volant est mobile et, en fonction des dimensions individuelles de la gaine de mousse et/ou du couvercle (18), est alignée à l'autre partie de palier (26) et attachée à elle.

7. Unité de palier (22, 24) d'un ensemble de véhicule, de préférence un ensemble intérieur, dans lequel l'ensemble de véhicule possède un support monté sur le véhicule, en particulier un volant de direction de véhicule (12), et un composant pour fixation à l'élément support en particulier un module klaxon (14), **caractérisé en ce que** l'unité de palier (22, 24) se compose d'au moins deux parties de palier (26, 28, 46, 50), qui, de préférence sont alignées individuellement dans les trois axes l'une par rapport à l'autre et en particulier reliées l'une à l'autre par soudage par ultrasons, **caractérisé en ce que** l'une des parties de palier (26, 28, 46, 50) de l'unité de palier respective (22, 24) présente une surface de contact (38, 58) et que l'autre des parties de palier (28, 50) présente au moins une surface d'appui (34, 54), dans lequel sur la surface de contact (38, 58) et/ou la surface d'appui (34, 54) se trouve/trouvent au moins une protrusion de soudage (40, 56), sur laquelle les parties de palier (26, 28, 46, 50) sont soudées en contact les unes aux autres et de préférence ensemble.

8. Unité de palier selon la revendication 7, **caractérisé en ce que** la protrusion de soudage (40, 56) pour la partie opposée de palier (26, 28, 46, 50) est de forme se rétrécissant.

9. Unité de palier selon la revendication 7 ou 8, **caractérisé en ce que** l'unité de palier est réalisé sous la forme d'une douille de guidage, et/ou **caractérisé en ce qu'** est prévu un moyen de fixation supplémentaire (30), sous la forme d'une pièce séparée (30), qui vient en prise avec l'une des parties de palier (26, 28 , 46, 50), pour support ou montage additionnel de l'unité de palier (22, 24), et/ou **caractérisé en ce que** l'une des parties de palier (26, 28, 46, 50) est une extension formée d'un seul tenant formée sur l'armature du volant de direction, sur le surmoulage du volant de direction ou le module klaxon.

10. Volant de direction de véhicule (12) avec au moins un logement de fixation pour un module klaxon (14), en particulier pour un module airbag, **caractérisé en ce que** sur l'élément de fixation est prévu au moins une unité de palier (24) selon au moins l'une des revendications 7 à 9, pour le support et le positionnement du module klaxon (14).

11. Volant de direction de véhicule selon la revendication 10, **caractérisé en ce qu'**une partie de palier (26) est formée d'une seule pièce sur une armature de volant de direction ou par un surmoulage de volant de direction.

12. Module klaxon (14), en particulier un module airbag, destiné à être fixé à un volant de direction de véhicule (12), en particulier sur un volant de direction de véhicule selon l'une quelconque des revendications 10 ou 11, **caractérisé en ce que** sur le module klaxon (14) est prévu au moins une unité de palier (22) selon au moins l'une de revendications 7 à 9, de préférence en outre
**caractérisé en ce que** l'unité de palier (22) est formée d'une seule pièce avec un élément du module klaxon en forme de coupelle et/ou que l'unité de palier (22) comprend, une partie de palier radiale extérieure en forme de manchon (46) et une partie de palier disposée radialement à l'intérieur en forme de manchon (50), qui sont reliées l'une à l'autre par une bride (52),et où de préférence est présente une fente annulaire radiale (62) entre les parties de palier (46, 50).

13. Ensemble de volant de direction (10) comportant un volant de direction de véhicule (12) selon l'une quelconque des revendications 10 à 11 et un module klaxon (14) selon la revendication 12, qui est fixé sur le volant de direction de véhicule (12), **caractérisé en ce qu'**entre le volant de direction de véhicule (12) et le module klaxon (14) sont prévues des unités de palier (22, 24) selon l'une quelconque des revendications 7 à 9, à travers lequel le module de pavillon (14) est fixé axialement libre au volant de direction de véhicule (12).

14. Ensemble volant de direction selon la revendication 13, **caractérisé en ce qu'**est prévu sur le volant de direction de véhicule (12) et/ou sur le module klaxon (14) un moyen de fixation (30) ou un réceptacle (42, 44) pour un moyen de fixation (30) et/ou sur une partie de palier ( 26, 28, 46, 50) un autre moyen de fixation (32), dans lequel le ou les moyens de fixation (30, 32), qui en outre assure la fixation plus précisément assurent lors de l'alignement de la partie mobile de palier (28, 50) côté volant ou côté module.

15. Ensemble de volant de direction selon au moins l'une des revendications 13 et/ou 14, **caractérisé en ce que** le module klaxon (14) est fixé par l'intermédiaire d'un ressort d'encliquetage (68) sur le volant de direction de véhicule (12), et dans lequel de préférence sur l'unité de palier côté volant (24) se trouve une rainure pour emboîtement du ressort d'encliquetage (68).

16. Dispositif de fabrication d'un ensemble volant de direction selon l'une des revendications 13 à 15, en particulier par un procédé selon l'une quelconque des revendications 1 à 6, dans lequel le dispositif (80) possède une unité de fixation (82) pour verrouiller le support et/ou du composant et au moins un sonotrode mobile (86), dans lequel l'unité de fixation (82) et la sonotrode (86) sont mobiles l'une par rapport à l'autre, **caractérisé en ce que** le dispositif (80) comprend en outre un système de positionnement, lequel permet le réglage des parties de palier (26, 28, 46, 50) l'une par rapport à l'autre sur au moins un axe, de préférence dans les trois directions de l'espace.

17. Dispositif selon la revendication 16, **caractérisé en ce que** le dispositif (80) comprend au moins une des caractéristiques suivantes:
- Un système de mesure, qui détermine la position réciproque de l'unité de palier (22, 24) par rapport aux dimensions du support ou du composant associé
- Une unité de vissage (88), en particulier une unité de vissage multiple, pour le verrouillage automatique de l'unité de palier (22, 24) alignée sur le support ou sur le composant,
- Un dispositif de commande, qui actionne le système de positionnement pour aligner les parties de palier (26, 28, 46, 50) les unes par rapport aux autres en réponse aux données déterminées par le système de mesure,
- Un support pour l'élément mobile d'appui (28, 50), dans lequel le support est constitué par la sonotrode (86).

18. Appareil selon la revendication 17, **caractérisé en ce que** le système de mesure comprend au moins un laser pour détecter la position du support ou du composant et/ou **caractérisé en ce que** le système de positionnement est une table à 6 axes.
